(19) Europäisches Patentamt
European Patent Office
Office européen des brevets

(11) **EP 1 460 453 B1**

(12) **EUROPEAN PATENT SPECIFICATION**

(45) Date of publication and mention
of the grant of the patent:
**25.04.2007 Bulletin 2007/17**

(51) Int Cl.:
*G01S 17/89* (2006.01)        *G01S 17/10* (2006.01)

(21) Application number: **03006049.5**

(22) Date of filing: **19.03.2003**

(54) **Three-dimension vision system**

Dreidimensionales Bilderzeugungssytem

Imagerie tridimensionnelle

(84) Designated Contracting States:
**AT BE BG CH CY CZ DE DK EE ES FI FR GB GR HU IE IT LI LU MC NL PT RO SE SI SK TR**

(43) Date of publication of application:
**22.09.2004 Bulletin 2004/39**

(73) Proprietor: **C.R.F. SOCIETA' CONSORTILE PER AZIONI**
**10043 Orbassano (Torino) (IT)**

(72) Inventors:
• **Liotti, Luca**
  **c/o C.R.F. Societa Consortile per A.**
  **10043 Orbassano (Torino) (IT)**
• **Repetto, Pier Mario**
  **c/o C.R.F. Società Consortile**
  **10043 Orbassano (Torino) (IT)**
• **Dugand, Marie Marguerite**
  **C.R.F. Soc. Consortile**
  **10043 Orbassano (Torino) (IT)**
• **Borello, Elena**
  **c/o C.R.F. Società Consortile**
  **10043 Orbassano (Torino) (IT)**
• **Balocco, Elena**
  **c/o C.R.F. Società Consortile**
  **10043 Orbassano (Torino) (IT)**
• **Perlo, Piero**
  **c/o C.R.F. Società Consortile**
  **10043 Orbassano (Torino) (IT)**

(74) Representative: **Notaro, Giancarlo et al**
**Buzzi, Notaro & Antonielli d'Oulx S.r.l.**
**Via Maria Vittoria 18**
**10123 Torino (IT)**

(56) References cited:
**WO-A-03/016944          US-A- 5 835 204**

• **PELLEGRINI S ET AL: "LASER-BASED DISTANCE MEASUREMENT USING PICOSECOND RESOLUTION TIME-CORRELATED SINGLE-PHOTON COUNTING" MEASUREMENT SCIENCE AND TECHNOLOGY, IOP PUBLISHING, BRISTOL, GB, vol. 11, no. 6, June 2000 (2000-06), pages 712-716, XP001073125 ISSN: 0957-0233**

**Description**

The present invention relates to the field of three-dimensional vision systems of the type defined in the preamble of claim 1.

From document WO-A-03016944, after which the preamble of claim 1 is drafted, it is known a device for recording three-dimensional distance-measuring images of an object surface by measuring light propagation time using a short-term integrated photodetector. An interpolation operation is carried out on the acquired data in the integration windows.

Document US 6 057 909 discloses a system that detect a scene by sending light pulses with a certain duration T and integrating the received signals in a time window of the same duration T and shifted of a certain time $\tau$. The selection of such duration and shift time $\tau$ determines the field depth of the system. An array of linear shutters is provided, that makes detectable for the sensor only a slice of the scene per time, in a sequential scan that is performed on each row of photodetectors.

Document US2001/0024271 discloses a distance measurement apparatus using photodetectors for detecting echo signals, that is concerned with solving the problem of shot noise, i.e. the quantistic fluctuation of the photogenerated electrons, by weighing the number of electrons accumulated in adjacent integration windows corresponding to the first and second consecutive sequences.

The purpose of the present invention is to provide a three-dimensional vision system of the type specified above which will be capable of reconstructing a scene comprised within a field of view FOV and with a field depth limited between a value $d_{min}$ and a value $d_{max}$.

In order to achieve the above purpose, the system according to the invention includes the features of the characterizing part of claim 1.

In the preferred embodiment of the invention, the three-dimensional vision system is designed so as to have a duration $\Delta t$ of the pulse equal to:

$$\Delta t = 2(d_{max} - d_{min})/(n-1)c$$

where c is the speed of light and n is the number of sequences.

Once again according to the preferred embodiment, the duration $\Delta t_f$ of each window is equal to the duration of the pulse $\Delta t$ of the source.

The aforesaid transmission module can be based upon a single laser or a laser array, upon a single LED or a LED array, or upon any other light source, preferably with emission in the near IR (0.78 $\mu$m to 1.1 $\mu$m) or else in the infrared.

The receiver module is preferably a CCD sensor array or a CMOS sensor array.

The transmission module can be scanned either mechanically or electronically.

Alternatively, the receiver module is made up of a single sensor scanned either mechanically or electro-optically. Further characteristics and advantages of the invention will emerge clearly from the ensuing description with reference to the annexed drawings, which are provided purely by way of non-limiting example and in which:

- Figure **1** is a block diagram of the three-dimensional vision system according to the invention; and
- Figures **2, 3**, and **4** are diagrams illustrating the basic principles of the vision system according to the invention.

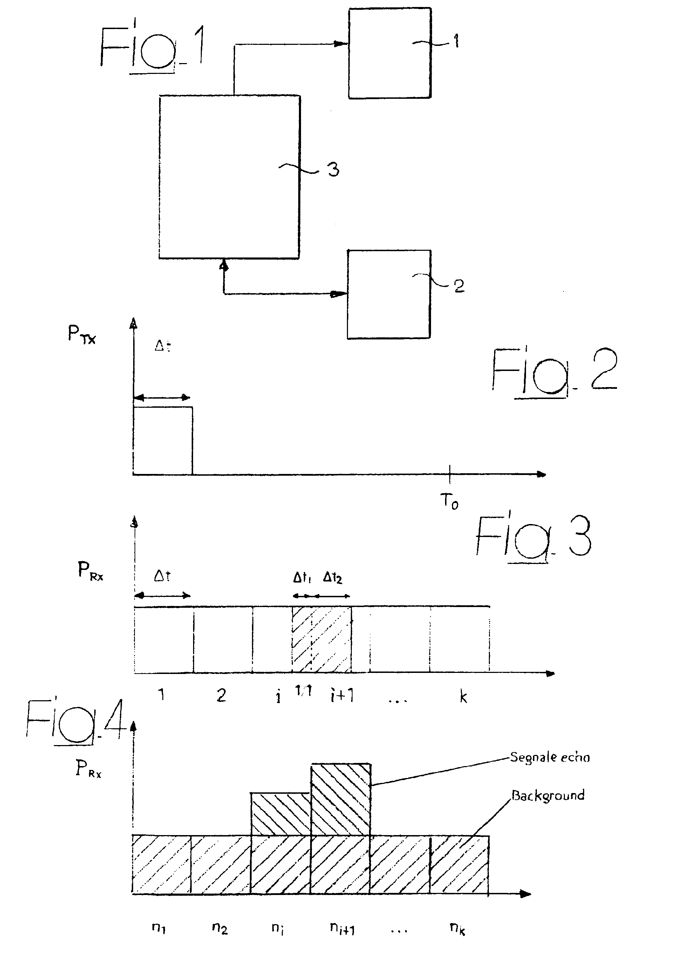

With reference to Figure 1, the reference number 1 designates, as a whole, the transmission module of the system according to the invention, whilst the reference number 2 designates the receiver module, which receives the signal reflected by an obstacle forming part of the scene that is impinged upon by the radiation emitted by the transmission module 1. Associated to the transmission module 1 and the receiver module 2 are electronic processing-synchronization means 3.

Briefly described in what follows is the theoretical principle underlying the system according to the invention.

Assuming the need to measure the distance of objects in a range D, the time taken for a light signal to cover a range 2D is:

$$T_0 = 2D/c$$

where c is the speed of light.

The time $T_0$ is also the maximum time taken by the light pulse to be detected if it has been reflected by objects at a distance not greater than D.

In the system according to the invention, at the instant $t_0 = 0$ the transmission module 1 emits a first light pulse of duration $\Delta t$. There is imposed the need for $\Delta t$ to be an integer submultiple of $T_0$, i.e., such as to satisfy the relation $(k-1)\Delta t = T_0$, where k is a integer number. The said situation is illustrated in the diagram of Figure 2.

The transmitted pulse impinges upon an obstacle, is reflected, and a percentage of the pulse (which depends upon the distance, the reflectivity, etc.) bounces back and is detected by the receiver 2. At the same instant $t_0 = 0$, the receiver begins to integrate the signals received in k consecutive time windows of length $\Delta t$, in which there are accumulated a number $n_j$ (j = 1, ..., k) of electrons (see Figure 3).

In this way, in the k windows (of total amplitude $T_0 + \Delta t$) all the pulses and only the pulses reflected by objects at a distance comprised between 0 and D, which fall in the first and in the last window, respectively, are integrated. Pulses reflected by obstacles at a distance greater than D are not detected. The echo pulse reflected by the object falls within one or two integration windows. In general, one first fraction of length $\Delta t_1$ of the echo pulse will fall in the i-th window, and the remaining portion, having a length $\Delta t_2$, will fall in the i+1-th window ($\Delta t_2 + \Delta t_1 = \Delta t$). If the echo pulse falls entirely within a single window, then $\Delta t_2 = 0$.

The time interval between the instant $t_0 = 0$ and the rising edge of the echo pulse is equal to the time of flight of the pulse, and enables the distance of the object to be deduced. The number of electrons integrated in each individual window depends upon the background signal and upon the intensity of the echo signal received, which, in turn, depends upon the reflectivity and upon the distance of the object (see Figure 4).

If, for each individual integration window, N is the number of background electrons and $N_{echo}$ is the total number of electrons of the received signal, then the number $n_i$ of the electrons integrated in the i-th window is equal to:

$$n_k = N \text{ for each k other than } \{i, i+1\}$$

$$n_i = N + N_{echo}\Delta t_1/\Delta t$$

$$n_{i+1} = N + N_{echo}\Delta t_2/\Delta t.$$

By solving the above equations, the following is obtained:

$$\Delta t_1 = (n_i - N)/(n_{i+1} + n_i - 2N)\Delta t$$

It is evident that, for calculation of $\Delta t_1$ according to the present technique, it is sufficient to use just two integration windows $n_i$ and $n_{i+1}$ only in the case where the number of background electrons N is zero or, in any case, very small as compared to the number of signal electrons. In general, for N other than zero (as occurs when the technique is applied in illuminated internal or external environments), the use is required of at least one third integration window ($n_k$), which enables the error of calculation of the distance to be reduced significantly.

The integration window for the acquisition of the background can also be temporally out of phase with respect to the preceding one in such a way as not to collect the echo radiation coming from obstacles set in the range of distance of interest and as to collect only the radiation corresponding to the background. In this sense, whereas each sequence corresponding to the window for collecting the echo signal must necessarily be temporally out of phase with respect to the preceding one by a time interval equal to the duration of the window itself, the sequence corresponding to the window for collecting the background signal can be out of phase by a greater amount.

The distance d of the object is:

$$d = [i - (\Delta t_1/\Delta t)] /*D/k$$

The formula for the measurement of the distance contains the ratio between the number of electrons integrated in the windows of interest: the result is therefore already independent of the reflectivity of the object, and only depends upon the distance thereof from the receiver. The error on the individual quantities $n_j$ depends upon various factors: shot noise, dark noise, reset noise, etc. In the case of the invention, just the shot noise of the signal is taken into account, which, in conditions of normal light intensity, is the dominant contribution. The error on each quantity $n_j$ will be:

$$\sigma_{nj} = \sqrt{n_j}$$

If the error on the formula for obtaining $\Delta t_1$ is propagated under Gaussian hypotheses, the error $\sigma_d$ on the measurement of the distance is obtained:

$$\sigma_d = D/k/(n_{i+1}+n_i - 2N)\sqrt{(2n_i + n_{i+1} + 5N)}$$

If the fact that $n_{i+1}+n_i - 2N$ is the number of integrated electrons generated just by the transmitted signal is taken into account, it is found that:

$$\sigma_d \leq \sigma_{max} = D/k/N_{sig}\sqrt{(2N_{sig} + 8N)} \quad \sigma_{max} = \text{maximum error}$$

Acquisition of the various quantities $n_k$ takes place by serial integration of the signal in the individual windows for a large number of times. The symbol of approximation depends upon the fact that some factors of delay, such as for example the read times, have been neglected.

Of course, without prejudice to the principle of the invention, the details of implementation and the embodiments may vary widely with respect to what is described and illustrated herein purely by way of example, without thereby departing from the scope of the present invention.

**Claims**

1. A three-dimensional vision system, comprising:

   - a transmission module (1), which includes a radiation source, the transmission module being constituted by a pulsed source illuminating a scene to be recorded in three dimensions, which, for each three-dimensional recording, emits $Q = m \times k$ pulses of duration $\Delta t$, with repetition frequency equal to $f = dc/\Delta t$, do being the duty cycle of the pulsed source signal;
   - a receiver module (2), which comprises at least one photosensitive element, operable in the same spectral window as the said radiation source, said receiver module being adapted to receive radiation from said radiation source and reflected from an object located within said scene ; and
   - control and processing electronic means (3) associated with said receiver module;

   the aforesaid control and processing electronic means comprising processing-synchronization means capable of carrying out, for each sequence k, an integration operation of the m echo pulses associated with said sequence, said integration operation being used to accumulate a number of electrons (nj) over m integration windows, each of said integration windows having a duration $\Delta t_f$ and a repetition frequency f,and the phase difference between the first window of the first sequence of integration windows and the rising edge of the first transmitted pulse being equal to $\tau$;
   **characterized in that**
   each of said k sequences of integration windows is temporally out of phase with respect to the previous sequence of integration windows by a time interval equal to the pulse duration $\Delta t$, said time duration $\Delta t_f$ being equal to $\Delta t$, said pulse duration $\Delta t$ being an integer submultiple of a maximum time of flight ($T_0$); and
   said control and processing electronic means (3) further comprising means adapted to calculate the distance covered by said radiation by:

   a) identifying, among said k sequences of integration windows, a first and a second consecutive sequences of integration windows received at one same photosensitive element in which the echo pulse is integrated and
   b) performing a calculation containing a ratio of the number ($n_i$; $n_{i+1}$) of electrons accumulated in said windows corresponding to said first and second consecutive sequences of integration windows in order to determine the rising edge of said echo pulse with respect to said sequences of integration windows, and
   c) extrapolating on the basis of the position (i) of said first sequence of integration windows identified among said k sequences of integration windows the time of flight of the pulse, said time of flight being equal to the distance in time between the rising edge of the pulse and the rising edge of the received echo pulse.

2. The three-dimensional vision system according to Claim 1, in which the phase difference σ between the first window of the first sequence of integration windows and the rising edge of the first transmitted pulse is equal to the time of flight of a pulse reflected by an object at the minimum distance.

3. The three-dimensional vision system according to Claim 1, in which the duration of the pulse Δt said pulse duration Δt is an integer submultiple of a maximum time of flight ($T_0$) through the relations :

$$\Delta t = 2(d_{max} - d_{min})/( k - 1)c$$

and

$$(k-1)\Delta t = T_0$$

where c is the speed of light, $d_{max}$ and $d_{min}$ are values limiting a field depth and k is number of sequences.

4. The three-dimensional vision system according to Claim 1, in which the transmitter is based upon a single laser or a laser array.

5. The three-dimensional vision system according to Claim 1, in which the transmitter emits radiation in the near infrared (0.7 to 1.1 μm).

6. The three-dimensional vision system according to Claim 1, in which the receiver is a CCD sensor array.

7. The three-dimensional vision system according to Claim 1, in which the receiver is a CMOS sensor array.

8. The three-dimensional vision system according to Claim 1, in which the transmitter is scanned either mechanically or electronically.

9. The three-dimensional vision system according to Claim 1, in which the receiver is a single sensor and is scanned either mechanically or electro-optically.

10. The three-dimensional vision system according to Claim 1, in which $d_{max}$ = 15 m and $d_{min}$ = 0, k = 3, m = 1500, dc = 0.1%, and Δt = 50 ns.

11. The three-dimensional vision system according to Claim 1, in which $d_{max}$ = 30 m and = 0, k = 3, m = 1500, dc = 0.1%, and Δt = 100 ns.

12. The three-dimensional vision system according to Claim 1, in which $d_{max}$ = 30 m and $d_{min}$ = 0, k = 5, m = 900, dc = 0.1%, and Δt = 50 ns.

13. The three-dimensional vision system according to Claim 1, in which the integration windows are obtained with an electro-optical modulator.

14. The three-dimensional vision system according to Claim 1, in which the integration windows are obtained with an electro-mechanical modulator.

15. The three-dimensional vision system according to Claim 1, **characterized in that** k is greater than or equal to 3 in order to enable evaluation of the number of background electrons N.

16. The three-dimensional vision system according to Claim 1, **characterized in that** k is equal to 2, and the system for measurements of distance is used in applications **characterized by** a very low number of background electrons k , for example at night.

17. The three-dimensional vision system according to Claim 1, **characterized in that** k is equal to 2, and the measurement of the number of background electrons N is carried out by using a third sequence of integration windows, which is temporally out of phase with respect to the preceding one by a time interval greater than $\Delta t_f$.

**Patentansprüche**

1.  Dreidimensionales Bilderzeugungssystem, welches umfasst:

    - ein Übertragungsmodul (1), welches eine Strahlungsquelle beinhaltet, wobei das Übertragungsmodul gebildet wird durch eine gepulste Quelle, welche eine in drei Dimensionen aufzunehmende Szene beleuchtet, welche für jedes dreidimensionale Aufzeichnen Q = m x k Pulse einer Dauer $\Delta t$ aussendet mit einer Wiederholfrequenz gleich f = dc/$\Delta t$, wobei dc das Tastverhältnis des Signals der gepulsten Quelle ist;
    - ein Empfängermodul (2), welches wenigstens ein photoempfindliches Element umfasst, welches in dem gleichen spektralen Fenster wie die Strahlungsquelle betreibbar ist, wobei das Empfängermodul angepasst ist, um Strahlung von der Strahlungsquelle und reflektiert von einem Objekt, welches sich in der Szene befindet, zu empfangen; und
    - elektronische Steuer- und Verarbeitungsmittel (3), welche mit dem Empfängermodul verbunden sind;
    - wobei die elektronischen Steuer- und Verarbeitungsmittel Verarbeitungssynchronisationsmittel umfassen, welche geeignet sind, für jede Sequenz k eine Integrationsoperation der m Echopulse, welche mit der Sequenz verbunden sind, auszuführen, wobei die Integrationsoperation benutzt wird, um eine Anzahl von Elektronen (nj) über m Integrationsfenster anzusammeln, wobei jedes der Integrationsfenster eine Dauer $\Delta t_f$ und eine Wiederholfrequenz f hat und der Phasenunterschied zwischen dem ersten Fenster der ersten Sequenz von Integrationsfenstern und der steigenden Flanke des ersten übertragenen Pulses gleich $\tau$ ist;

    **dadurch gekennzeichnet, dass**
    jede der k Sequenzen von Integrationsfenstern zeitlich phasenverschoben ist in Bezug auf die vorherige Sequenz von Integrationsfenstern um ein Zeitintervall, welches gleich der Pulsdauer $\Delta t$ ist, wobei die Zeitdauer $\Delta t_f$ gleich $\Delta t$ ist, wobei die Pulsdauer $\Delta t$ ein ganzzahliger Teil der Maximallaufzeit ($T_0$) ist; und
    die elektronischen Steuer- und Verarbeitungsmittel (3) weiterhin Mittel umfassen, welche angepasst sind, um die von der Strahlung zurückgelegte Entfernung zu berechnen durch:

    a) Ermitteln, aus k Sequenzen von Integrationsfenstern, einer ersten und zweiten aufeinanderfolgenden Sequenz von Integrationsfenstern, welche an dem gleichen photoempfindlichen Element empfangen werden, in welchem der Echopuls integriert wird, und
    b) Ausführen einer Berechnung, welche ein Verhältnis der Anzahl ($n_i$; $n_{i+1}$) von Elektronen enthält, welche in den Fenstern angesammelt sind, welche der ersten und zweiten aufeinanderfolgenden Sequenz von Integrationsfenstern entsprechen, um die steigende Flanke des Echopulses zu bestimmen in Bezug auf die Sequenzen von Integrationsfenstern, und
    c) Extrapolieren, auf Basis der Position (i) der ersten Sequenz von Integrationsfenstern, welche aus den k Sequenzen von Integrationsfenstern ermittelt wurde, der Laufzeit des Pulses, wobei die Laufzeit gleich dem zeitlichen Abstand zwischen der steigenden Flanke des Pulses und der steigenden Flanke des empfangenen Echopulses ist.

2.  Dreidimensionales Bilderzeugungssystem gemäß Anspruch 1, in welchem der Phasenunterschied $\tau$ zwischen dem ersten Fenster der ersten Sequenz von Integrationsfenstern und der steigenden Flanke des ersten übertragenen Pulses gleich der Laufzeit eines Pulses ist, welcher von einem Objekt bei minimalem Abstand reflektiert wird.

3.  Dreidimensionales Bilderzeugungssystem gemäß Anspruch 1, in welchem die Dauer des Pulses $\Delta t$ die Pulsdauer $\Delta t$ ein ganzzahliger Teil der maximalen Laufzeit ($T_0$) ist durch die Beziehungen:

$$\Delta t = 2 \, (d_{max} - d_{min}) / (k - 1) \, c$$

und

$$(k - 1) \, \Delta t = T_0$$

wobei c die Lichtgeschwindigkeit ist, $d_{max}$ und $d_{min}$ die Werte sind, welche die Tiefenschärfe begrenzen, und k die Anzahl der Sequenzen ist.

4. Dreidimensionales Bilderzeugungssystem gemäß Anspruch 1, in welchem der Sender auf einem einzelnen Laser oder einem Laserfeld basiert.

5. Dreidimensionales Bilderzeugungssystem gemäß Anspruch 1, in welchem der Sender Strahlung im nahen Infrarotbereich (0,7 bis 1,1 $\mu$m) aussendet.

6. Dreidimensionales Bilderzeugungssystem gemäß Anspruch 1, in welchem der Empfänger ein CCD-Sensorfeld ist.

7. Dreidimensionales Bilderzeugungssystem gemäß Anspruch 1, in welchem der Empfänger ein CMOS-Sensorfeld ist.

8. Dreidimensionales Bilderzeugungssystem gemäß Anspruch 1, in welchem der Sender entweder mechanisch oder elektronisch abgetastet wird.

9. Dreidimensionales Bilderzeugungssystem gemäß Anspruch 1, in welchem der Empfänger ein einzelner Sensor ist und entweder mechanisch oder elektrooptisch abgetastet wird.

10. Dreidimensionales Bilderzeugungssystem gemäß Anspruch 1, in welchem $d_{max}$ = 15 m und $d_{min}$ = 0, k = 3, m = 1500, dc = 0,1 % und $\Delta t$ = 50 ns.

11. Dreidimensionales Bilderzeugungssystem gemäß Anspruch 1, in welchem $d_{max}$ = 30 m und = 0, k = 3, m = 1500, dc = 0,1 % und $\Delta t$ = 100 ns.

12. Dreidimensionales Bilderzeugungssystem gemäß Anspruch 1, in welchem $d_{max}$ = 30 m und $d_{min}$ = 0, k = 5, m = 900, dc = 0,1 % und $\Delta t$ = 50 ns.

13. Dreidimensionales Bilderzeugungssystem gemäß Anspruch 1, in welchem die Integrationsfenster durch einen elektrooptischen Modulator erhalten werden.

14. Dreidimensionales Bilderzeugungssystem gemäß Anspruch 1, in welchem die Integrationsfenster durch einen elektromechanischen Modulator erhalten werden.

15. Dreidimensionales Bilderzeugungssystem gemäß Anspruch 1, **dadurch gekennzeichnet, dass** k größer oder gleich 3 ist, um eine Auswertung der Anzahl von Hintergrundelektronen N zu ermöglichen.

16. Dreidimensionales Bilderzeugungssystem gemäß Anspruch 1, **dadurch gekennzeichnet, dass** k gleich 2 ist und das System für Abstandsmessungen in Anwendungen benutzt wird, welche durch eine sehr geringe Anzahl von Hintergrundelektronen k **gekennzeichnet** sind, z.B. bei Nacht.

17. Dreidimensionales Bilderzeugungssystem gemäß Anspruch 1, **dadurch gekennzeichnet, dass** k gleich 2 ist und die Messung der Anzahl von Hintergrundelektronen N ausgeführt wird durch Verwenden einer dritten Sequenz von Integrationsfenstern, welche zeitlich phasenverschoben ist in Bezug auf die vorhergehende um ein Zeitintervall, welches größer als $\Delta t_f$ ist.

**Revendications**

1. Système de vision tridimensionnelle, comprenant :

- un module d'émission (1), qui comporte une source de rayonnement, le module d'émission étant constitué d'une source pulsée éclairant un lieu a enregistrer en trois dimensions, qui, pour chaque enregistrement tridimensionnel émet Q = m x k impulsions d'une durée $\Delta t$, la fréquence de répétition étant égale à f = dc/$\Delta t$, dc étant le cycle de service du signal de source pulsée ;
- un module de réception (2), qui comprend au moins un élément photosensible, pouvant fonctionner dans la même fenêtre spectrale que ladite source de rayonnement, ledit module de réception étant adapté pour recevoir un rayonnement provenant de ladite source de rayonnement et réfléchi par un objet situé dans ledit lieu ; et

- un moyen électronique de commande et de traitement (3) associé audit module de réception ; le moyen électronique de commande et de traitement susdit comprenant un moyen de traitement-synchronisation capable d'exécuter, pour chaque séquence k, une opération d'intégration des m impulsions d'écho associées à ladite séquence, ladite opération d'intégration étant utilisée pour accumuler un certain nombre d'électrons (nj) sur m fenêtres d'intégration, chacune desdites fenêtres d'intégration ayant une durée $\Delta t_f$ et une fréquence de répétition f, et la différence de phase entre la première fenêtre de la première séquence de fenêtres d'intégration et le bord montant de la première impulsion transmise étant égale à $\tau$ ;

**caractérisé en ce que** :

chacune desdites k séquences de fenêtres d'intégration est temporellement déphasée par rapport à la séquence précédente de fenêtres d'intégration d'un intervalle de temps égal à la durée d'impulsion $\Delta t$, ladite durée de temps $\Delta t_f$ étant égale à $\Delta t$, ladite durée d'impulsion $\Delta t$ étant un sous-multiple entier d'un temps de vol maximum $(T_0)$ ; et

ledit moyen électronique de commande et de traitement (3) comprenant en outre un moyen adapté pour calculer la distance couverte par ledit rayonnement grâce aux étapes consistant à :

a) identifier, parmi lesdites k séquences de fenêtres d'intégration, une première et une seconde séquences consécutives de fenêtres d'intégration reçues au niveau d'un même élément photosensible dans lequel on intègre l'impulsion d'écho et

b) effectuer un calcul contenant une proportion du nombre $(n_i ; n_{i+1})$ d'électrons accumulés dans ladite fenêtre correspondant auxdites premières et secondes séquences consécutives de fenêtres d'intégration afin de déterminer le bord montant de ladite impulsion d'écho par rapport auxdites séquences de fenêtres d'intégration, et

c) extrapoler, sur la base de la position (i) de ladite première séquence de fenêtres d'intégration identifiée parmi lesdites k séquences de fenêtres d'intégration, le temps de vol de l'impulsion, ledit temps de vol étant égal à la distance en temps entre le bord montant de l'impulsion et le bord montant de l'impulsion d'écho reçue.

2. Système de vision tridimensionnelle selon la revendication 1, dans lequel la différence de phase $\tau$ entre la première fenêtre de la première séquence de fenêtres d'intégration et le bord montant de la première impulsion transmise est égale au temps de vol d'une impulsion réfléchie par un objet à la distance minimum.

3. Système de vision tridimensionnelle selon la revendication 1, dans lequel la durée de l'impulsion $\Delta t$, ladite durée d'impulsion $\Delta t$ étant un sous-multiple entier d'un temps de vol maximum $(T_0)$, est calculée à partir des relations mathématiques :

$$\Delta t = 2(d_{max} - d_{min})/(k - 1)c$$

et

$$(k-1)\Delta t = T_0$$

où c est la vitesse de la lumière, $d_{max}$ et $d_{min}$ sont des valeurs limitant une profondeur de champ et k est le nombre de séquences.

4. Système de vision tridimensionnelle selon la revendication 1, dans lequel le transmetteur est basé sur un seul laser ou un réseau de lasers.

5. Système de vision tridimensionnelle selon la revendication 1, dans lequel le transmetteur émet un rayonnement dans le proche infrarouge (de 0,7 à 1,01 $\mu$m).

6. Système de vision tridimensionnelle selon la revendication 1, dans lequel le récepteur est un réseau de capteurs CCD.

7. Système de vision tridimensionnelle selon la revendication 1, dans lequel le récepteur est un réseau de capteurs CMOS.

8. Système de vision tridimensionnelle selon la revendication 1, dans lequel le transmetteur est balayé soit mécaniquement soit électroniquement.

9. Système de vision tridimensionnelle selon la revendication 1, dans lequel le récepteur est un capteur unique et est balayé soit mécaniquement soit de manière électro-optique.

10. Système de vision tridimensionnelle selon la revendication 1, dans lequel $d_{max}$ = 15 m et $d_{min}$ = 0, k = 3, m = 1 500, dc = 0,1 %, et $\Delta t$ = 50 ns.

11. Système de vision tridimensionnelle selon la revendication 1, dans lequel $d_{max}$ = 30 m et $d_{min}$ = 0, k = 3, m = 1 500, dc = 0,1 %, et $\Delta t$ = 100 ns.

12. Système de vision tridimensionnelle selon la revendication 1, dans lequel $d_{max}$ = 30 m et $d_{min}$ = 0, k = 5, m = 900, de = 0,1 %, et $\Delta t$ = 50 ns.

13. Système de vision tridimensionnelle selon la revendication 1, dans lequel les fenêtres d'intégration sont obtenues au moyen d'un modulateur électro-optique.

14. Système de vision tridimensionnelle selon la revendication 1, dans lequel les fenêtres d'intégration sont obtenues au moyen d'un modulateur électromécanique.

15. Système de vision tridimensionnelle selon la revendication 1, **caractérisé en ce que** k est supérieur ou égal à 3 afin de permettre une évaluation du nombre d'électrons de fond N.

16. Système de vision tridimensionnelle selon la revendication 1, **caractérisé en ce que** k est égal à 2, et le système de mesure de distance est utilisé dans les applications **caractérisées par** un très faible nombre d'électrons de fond k, par exemple, la nuit.

17. Système de vision tridimensionnelle selon la revendication 1, **caractérisé en ce que** k est égal à 2, et la mesure du nombre d'électrons de fond N est exécutée au moyen d'une troisième séquence de fenêtres d'intégration, qui est temporellement déphasée par rapport à la précédente d'un intervalle de temps supérieur à $\Delta t_f$.

Fig_1

Fig. 2

Fig. 3

Fig. 4

Segnale echo

Background